# EUROPÄISCHE PATENTANMELDUNG

(11) **EP 1 087 324 A1**
(43) Veröffentlichungstag der Anmeldung: **28.03.2001**
(21) Anmeldenummer: 00119702.9
(22) Anmeldetag: 09.09.2000
(51) Int. Cl.: G06K 7/10

(54) **Optoelektronische Vorrichtung zum Erkennen von Barcodes**

(30) Priorität: 24.09.1999 DE 19945837
(71) Anmelder: Leuze electronic GmbH + Co., D-73277 Owen (DE)
(72) Erfinder: Claus, Armin, 72622 Nürtingen (DE)
(74) Vertreter: Ruckh, Rainer Gerhard, Dr.

(57) **Zusammenfassung**

Die Erfindung betrifft eine optoelektronische Vorrichtung (1) zum Erkennen von Barcodes (2) mit jeweils einer Anordnung von hellen und dunklen Flächenelementen mit wenigstens einem Sendelichtstrahlen (3) emittierenden Sender (4) und einem Empfangslichtstrahlen (5) empfangenden Empfänger (6) mit einer matrixförmigen Anordnung von Empfangselementen, wobei der Barcode (2) auf dem Empfänger (6) abgebildet ist und an den Ausgängen der Empfangselemente Empfangssignale in Form von der Struktur der Flächenelemente des Barcodes (2) entsprechenden Grauwerten anstehen. Dem Empfänger (6) ist eine adaptive Schwellwerteinheit (11) nachgeordnet, in welcher die Empfangssignale in binäre Signale gewandelt werden und in einer der adaptiven Schwellwerteinheit (11) nachgeordneten Auswerteeinheit (13) erfolgt anhand der Folge der binären Signale die Dekodierung der Marke.

## Beschreibung

Die Erfindung betrifft eine optoelektronische Vorrichtung zum Erkennen von Barcodes gemäß dem Oberbegriff des Anspruchs 1.

Eine derartige Vorrichtung, die insbesondere zum Erkennen von ein- und zweidimensionalen Barcodes eingesetzt wird, stellt der Barcodeleser IMAGE-TEAM 4700HD/HD10 der Firma Welch Allyn dar. Mit diesem Barcodeleser wird das Kontrastmuster von hellen und dunklen Flächenelementen eines Barcodes als zweidimensionales Bild erfasst.

Nachteilig hierbei ist die äußerst aufwendige Auswertung der Bildinformationen mittels einer Bildverarbeitungssoftware. Für jeden der einzelnen Bildpunkte liegt ein bestimmter Grauwert vor. Um aus diesen Bildinformationen, die ein dreidimensionales Datenfeld bilden, das Kontrastmuster eines Barcodes zu gewinnen, müssen die unterschiedlichen Bildpunkte, vorzugsweise jeweils in bestimmten Rastern, miteinander in Beziehung gesetzt und hinsichtlich ihrer Grauwerte bewertet werden. Dies ist nicht nur umständlich und zeitaufwendig, sondern erfordert zudem einen erheblichen Rechen- und Geräteaufwand, was die Kosten zum Lesen der Barcodes unerwünscht erhöht.

Der Erfindung liegt die Aufgabe zugrunde eine Vorrichtung der eingangs genannten Art so auszubilden, dass damit Marken möglichst einfach und mit geringem Aufwand erfassbar sind.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Erfindungsgemäß ist dem Empfänger der optoelektronischen Vorrichtung eine adaptive Schwellwerteinheit nachgeordnet, in welcher die Empfangssignale an den Ausgängen der matrixförmig angeordneten Empfangselemente in binäre Signale gewandelt werden. In einer der adaptiven Schwellwerteinheit nachgeordneten Auswerteeinheit erfolgt anhand der Folge der binären Signale die Dekodierung des Barcodes.

Der Grundgedanke der Erfindung besteht somit darin, mit dem Sender und dem Empfänger das Kontrastmuster eines Barcodes vollständig zu erfassen und dann die Bildinformation, die in Form von Grauwerten als analoge Empfangssignale an den Ausgängen der matrixförmig angeordneten Empfangselemente anstehen, mittels der adaptiven Schwellwerteinheit in eine binäre Signalfolge zu wandeln. Die Folge der binären Signale entspricht dem Muster der hellen und dunklen Flächenelemente des Barcodes und kann demzufolge in einer Auswerteeinheit, die der adaptiven Schwellwerteinheit nachgeordnet ist, zur Dekodierung des Barcodes verwendet werden.

Die Auswertung der Empfangssignale erfolgt mit einem geringen Rechenaufwand und mit einem ebenfalls geringen Schaltungsaufwand. Die optoelektronische Vorrichtung ist demzufolge auch äußerst kostengünstig herstellbar.

Besonders vorteilhaft ist der Empfänger von einem matrixförmigen CMOS-Bildsensor gebildet, dessen Empfangssignale zeilenweise über einen Analog-Digitalwandler in die adaptive Schwellwerteinheit eingelesen werden. Dabei ist die adaptive Schwellwerteinheit zweckmäßigerweise von einer Hardware-Schaltungsanordnung gebildet, die zudem mit dem CMOS-Bildsensor und dem Analog-Digitalwandler vorteilhafterweise eine integrierte Schaltungsanordnung bilden kann. Durch diese Ausführungsform ist die optoelektronische Vorrichtung bei einer sehr kleinen Baugröße besonders kostengünstig herstellbar.

Die Erfindung wird im nachstehenden anhand der Zeichnungen erläutert. Es zeigen:
- Figur 1: : Schematische Darstellung eines Ausschnitts der erfindungsgemäßen optoelektronischen Vorrichtung.
- Figur 2:: Erstes Ausführungsbeispiel eines Empfängers mit einer diesem nachgeordneten Schaltungsanordnung zur Auswertung der Empfangssignale.
- Figur 3:: Zweites Ausführungsbeispiel eines Empfängers mit einer diesem nachgeordneten Schaltungsanordnung zur Auswertung der Empfangssignale.
- Figur 4:: Blockschaltbild der adaptiven Schwellwerteinheit für die Schaltungsanordnung gemäß den Figuren 2 und 3.
- Figur 5:: Flussdiagramm der Auswertung in der adaptiven Schwellwerteinheit.

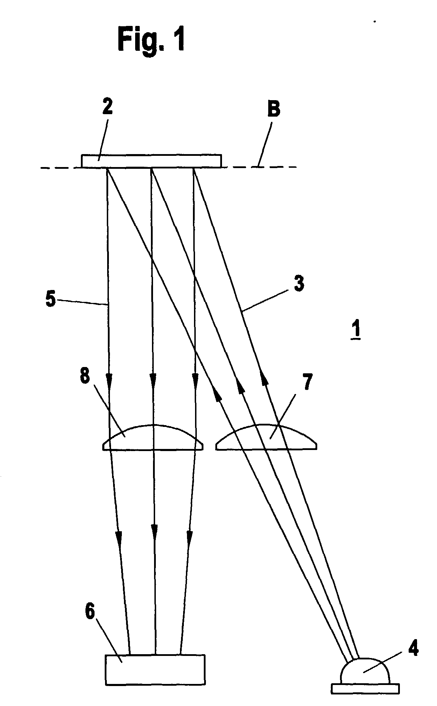

Figur 1 zeigt einen Ausschnitt einer optoelektronischen Vorrichtung 1 zum Erkennen von Barcodes 2. Die Barcodes 2 weisen eine Anordnung von hellen und dunklen Flächenelementen auf, die vorzugsweise als weiße und schwarze Flächenelemente ausgebildet sind. Die Barcodes 2 können zum einen als eindimensionale Barcodes 2 ausgebildet sein. In diesem Fall bestehen die Flächenelemente aus einer Folge von linear angeordneten schwarzen und weißen Strichelementen unterschiedlicher Breite. Desweiteren können die Barcodes 2 als zweidimensionale Barcodes 2 ausgebildet sein. In diesem Fall weisen die Barcodes 2 vorgegebene Muster von weißen und schwarzen rechteckigen Flächenelementen auf. Beispiele für derartige zweidimensionale Barcodes 2 sind Datamatix- und Aztec-Codes.

Die optoelektronische Vorrichtung 1 weist wenigstens einen Sendelichtstrahlen 3 emittierenden Sender 4 sowie einen Empfangslichtstrahlen 5 empfangenden Empfänger 6 auf. Der Sender 4 ist vorzugsweise von einer Leuchtdiode gebildet. Der Empfänger 6 weist eine flächige, matrixförmige Anordnung von nicht dargestellten Empfangselementen auf, wobei die Oberfläche des Empfängers 6 senkrecht zur Strahlachse der einfallenden Empfangslichtstrahlen 5 orientiert ist. Der Empfänger 6 ist dabei vorteilhafterweise von einem matrixförmigen CMOS-Bildsensor oder einem matrixförmigen CCD-Element gebildet.

Der Sender 4 und der Empfänger 6 sind seitlich versetzt nebeneinander angeordnet. Dem Sender 4 ist eine Sendeoptik 7 zur Strahlformung der Sendelichtstrahlen 3 nachgeordnet Vorteilhafterweise wird der Sender 4 auch ohne Sendeoptik betrieben. Dem Empfänger 6 ist eine Empfangsoptik 8 vorgeordnet, welche die Empfangslichtstrahlen 5 auf den Empfänger 6 fokussiert.

Die Sendelichtstrahlen 3 sind so geführt, dass diese möglichst gleichmäßig einen in einer Beleuchtungsebene B angeordneten Barcode 2 ausleuchten. Zweckmäßigerweise können zwei oder mehrere Sender 4 vorgesehen sind, wodurch die Beleuchtung der Beleuchtungsebene B besonders homogen gestaltet werden kann.

Den am Barcode 2 reflektierten Empfangslichtstrahlen 5 ist entsprechend dem Flächenmuster des Barcodes 2 eine Amplitudenmodulation aufgeprägt. Durch die auf den Empfänger 6 auftreffenden Empfangslichtstrahlen 5 wird auf den Empfangselementen des Empfängers 6 eine zweidimensionale Abbildung des Barcodes 2 erzeugt. Dabei liegt die Bildinformation des Barcodes 2 in Form von analogen Empfangssignalen an den Ausgängen der Empfangselemente an, wobei die analogen Empfangssignale von Grauwerten gebildet sind. Entsprechend der Struktur der hellen und dunklen Flächenelemente des Barcodes 2 ergibt sich eine entsprechende Grauwertverteilung an den Ausgängen der Empfangselemente.

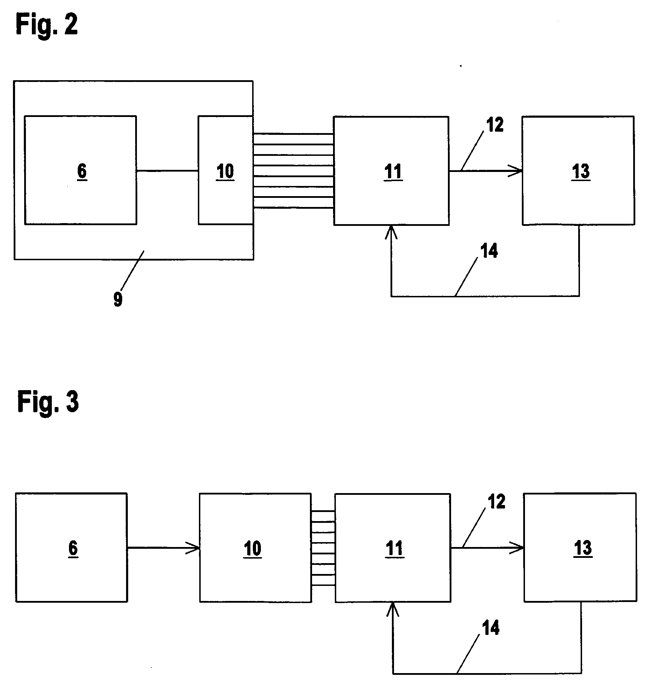

Figur 2 zeigt ein erstes Ausführungsbeispiel einer Schaltungsanordnung zur Auswertung der an den Ausgängen des Empfängers 6 anstehenden Empfangssignale.

Bei diesem Ausführungsbeispiel ist der Empfänger 6 von einem CMOS-Bildsensor gebildet. Der CMOS-Bildsensor weist eine matrixförmige Anordnung von Empfangselementen auf, die von Photodioden gebildet sind. Vorzugsweise ist eine rechteckige Anordnung von Photodioden vorgesehen, wobei je nach Auflösung eine entsprechende Anzahl von Photodioden gewählt wird. Beispielsweise kann der Empfänger 6 eine Anordnung von 320 x 256 Photodioden oder 640 x 480 Photodioden aufweisen.

Die Photodioden sind mit einer Auswertelogik auf einem Chip 9 in CMOS-Technologie integriert, der beispielsweise als ASIC ausgebildet ist. Im vorliegenden Beispiel ist auf diesem Chip 9 ein Analog-Digitalwandler 10 integriert, dessen Wortbreite 8 bit beträgt. Alternativ können auch Wortbreiten von beispielsweise 10 bit oder 12 bit verwendet werden.

Mit dem dem Empfänger 6 nachgeordneten Analog-Digitalwandler 10 werden die an den einzelnen Ausgängen der Empfangselemente anstehenden analogen Empfangssignale digitalisiert, so dass die analogen Grauwerte am Ausgang des 8 bit breiten Analog-Digitalwandlers 10 in 256 verschiedenen Stufen digitalisiert sind.

Die digitalisierten Empfangssignale der Empfangselemente werden nacheinander, vorzugsweise zeilenweise in eine adaptive Schwellwerteinheit 11 eingelesen. Die adaptive Schwellwerteinheit 11 ist von einer Hardware-Schaltungsanordnung gebildet und kann im einfachsten Fall auf dem Chip 9 mit den Empfangselementen und dem Analog-Digitalwandler 10 integriert sein. Die so gebildete Hardware-Schaltungsanordnung ist besonders vorteilhaft von einem ASIC gebildet.

Der Ausgang der adaptiven Schwellwerteinheit 11 ist über eine erste Zuleitung 12 an eine Auswerteeinheit 13 angeschlossen, die von einem Microcontroller oder dergleichen gebildet ist. Die adaptive Schwellwerteinheit 11 ist dabei von der Auswerteeinheit 13 gesteuert, wobei hierzu eine weitere Zuleitung 14 von einem Ausgang der Auswerteeinheit 13 auf die adaptive Schwellwerteinheit 11 geführt ist.

Erfindungsgemäß werden die Empfangssignale der Empfangselemente in der adaptiven Schwellwerteinheit 11 in eine binäre Signalfolge gewandelt, die in die Auswerteeinheit 13 eingelesen und dekodiert wird.

Vor der eigentlichen Dekodierung werden die Signale am Ausgang der adaptiven Schwellwerteinheit dazu verwendet, um eine Dekodiertabelle zu erstellen. Für den Fall eines Datamatrix Codes sind in dieser Dekodiertabelle die Elemente eines Barcodes jeweils durch einen Bitwert in der Dekodiertabelle repräsentiert. Anhand der Werte in der Dekodiertabelle erfolgt dann die eigentliche Dekodierung des Barcodes.

Bei der Dekodierung wird der Umstand ausgenutzt, dass die binäre Signalfolge den räumlichen Verlauf der vorzugsweise aus schwarzen und weißen Flächenelementen gebildeten Barcodestruktur unmittelbar wiedergibt. Durch die adaptive Schwellwerteinheit 11 wird somit die in der Grauwertverteilung enthaltene Bildinformation so reduziert, dass durch die Dekodierung der binären Signalfolge das Kontrastmuster eines Barcodes 2 unmittelbar erfasst werden kann. Die Erstellung einer Dekodiertabelle und die damit verbundenen Auswerteschritte sind dabei Bestandteil der Dekodierung des Barcodes.

Figur 3 zeigt ein zweites Ausführungsbeispiel einer Schaltungsanordnung zur Auswertung der an den Ausgängen des Empfängers 6 anstehenden Empfangssignale.

Bei diesem Ausführungsbeispiel ist der Empfänger 6 von einem matrixförmigen CCD-Element gebildet. Die Anzahl der Empfangselemente ist wiederum an die geforderte Auflösung des Empfängers 6 angepasst.

Die analogen Empfangssignale an den Ausgängen der Empfangselemente des CCD-Elements werden nacheinander in einen Analog-Digitalwandler 10 eingelesen, dessen Wortbreite wiederum 8 bit beträgt. Die von Grauwerten gebildeten analogen Empfangssignale werden dort digitalisiert und dann zeilenweise der adaptiven Schwellwerteinheit 11 zugeführt. Der adaptiven Schwellwerteinheit 11 ist wiederum die Auswerteeinheit 13 nachgeordnet.

Prinzipiell ist es auch möglich, dass die analogen Empfangssignale direkt und ohne Zwischenschaltung eines Analog-Digitalwandlers 10 der adaptiven Schwellwerteinheit 11 zugeführt werden.

Die digitalisierten Empfangssignale der Empfangselemente werden zeilenweise in die adaptive Schwellwerteinheit 11 eingelesen. Die Empfangssignale einer Zeile bilden eine quasikontinuierliche Empfangssignalkurve die in der adaptiven Schwellwerteinheit 11 in eine binäre Teilsignalfolge umgesetzt wird. Aus den einzelnen Teilsignalfolgen für die verschiedenen Zeilen wird dann die binäre Signalfolge erhalten, die in der Auswerteeinheit 13 zur Erfassung des Barcodes 2 dekodiert wird.

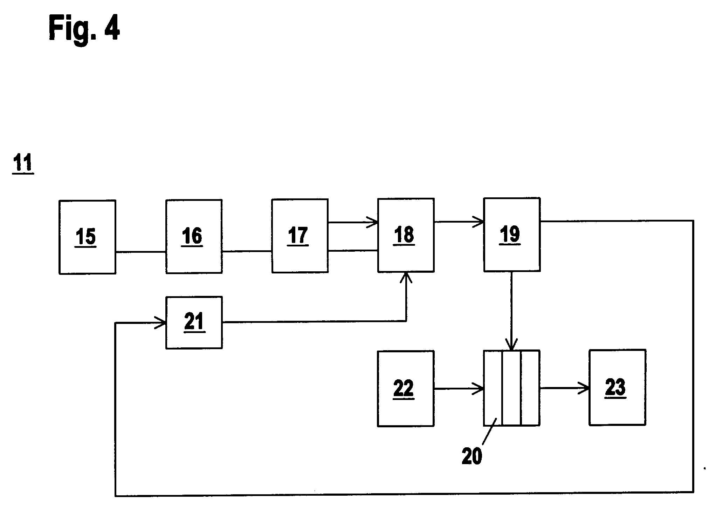

Figur 4 zeigt den Aufbau eines Ausführungsbeispiels dieser adaptiven Schwellwerteinheit 11. Die Empfangssignalkurve für eine Zeile des Empfängers 6 wird einem Filter 15 am Eingang der adaptiven Schwellwerteinheit 11 zugeführt, in welchem bauteilbedingte Störeinflüsse eliminiert werden.

Die am Ausgang des Filters 15 anstehende Empfangssignalkurve wird in einem Differenzierer 16 differenziert.

Die differenzierte Empfangssignalkurve enthält eine Folge von positiven und negativen Spitzenwerten. Eine ideale Folge von derartigen Spitzenwerten, bei der keinerlei Störeffekte wie z.B. Rauschsignale auftreten, enthält eine alternierende Folge von positiven und negativen Spitzenwerten. Jeder der positiven und negativen Spitzenwerte entspricht der Kante eines Flächenelementes eines Barcodes 2, d. h. die Position des entsprechenden Spitzenwertes kennzeichnet den Übergang von einem schwarzen zu einem weißen Flächenelement bzw. umgekehrt. Diese Nutzsignale werden mit den nachfolgenden Schaltungselementen von auftretenden Störsignalen unterschieden und von diesen getrennt.

Hierzu ist dem Differenzierer 16 eine Bewertungseinheit zur Bewertung der einzelnen Spitzenwerte der differenzierten Empfangssignalkurve nachgeschaltet.

Die Bewertungseinheit besteht aus einem Spitzenwertfinder 17 und einem diesem nachgeschalteten Spitzenwertselektierer 18, der über eine Steuereinheit 19 auf ein einzelnes Speicherelement 20 geführt ist, welche ebenfalls Bestandteil der Bewertungseinheit sind. Im Spitzenwertfinder 17 werden die Positionen der einzelnen Spitzenwerte des differenzierten Empfangssignals ermittelt.

Der Spitzenwertselektierer 18 besteht im wesentlichen aus einer Komparatorschaltung. Das Speicherelement 20 besteht vorzugsweise aus einem First-in-First-out (FIFO) Speicherelement 20, vorzugsweise einem Schieberegister bei dem der letzte Speicherwert überschrieben werden kann. In dem Speicherelement 20 können insgesamt drei Spitzenwerte abgespeichert werden.

Auf den Spitzenwertselektierer 18 ist eine Schwellwerteinheit 21 geführt. In der Schwellwerteinheit 21 wird der Schwellwert fortlaufend aus dem jeweils zuletzt als gültig bewerteten Spitzenwert berechnet. Hierzu wird der aktuelle Spitzenwert mittels eines nicht dargestellten Multiplizierers mit einem Faktor a multipliziert, der im Bereich -1 < a < 0 vorzugsweise im Bereich -0,75 < a <- 0,375 liegt. Unterschreitet jedoch der Betrag des Schwellwertes einen vorgegebenen Mindestwert, so wird der Schwellwert auf diesen Mindestwert gesetzt.

Auf den Eingang des ersten Speicherelements 20 ist ein von einer nicht dargestellten Kontrolleinheit, die beispielsweise in einer zentralen Recheneinheit integriert ist, gesteuerter Zeitgeber 22 geführt, der die zu den einzelnen Spitzenwerten die zugehörigen Zeitpunkte in die erste Speicherstelle des Speicherelements 20 einschreibt. Dieser Speicherwert ist überschreibbar und kann somit korrigiert werden. Bei fortlaufendem Einlesen weiterer gültiger Spitzenwerte werden die Speicherwerte jeweils um eine Speicherstelle weitergeschoben. Um einen Datenverlust zu vermeiden, werden zu vorgegebenen Zeitpunkten die beiden zuletzt eingelesenen Spitzenwerte in ein zweites Speicherelement 23 eingelesen. Das zweite Speicherelement 23 besteht aus einem First-in-First-out (FIFO) Speicherelement.

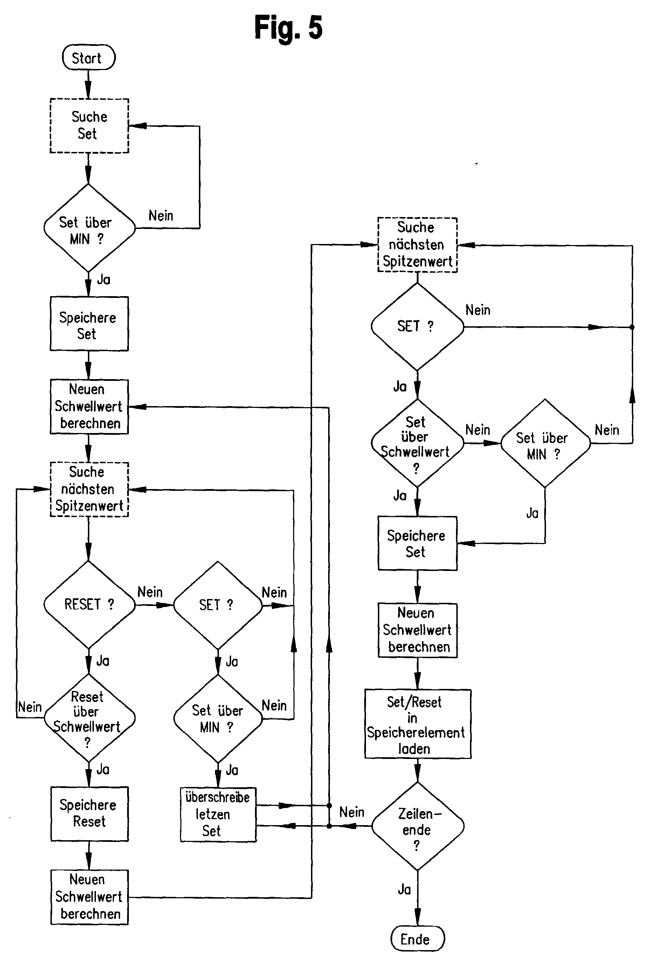

Die Funktion der Signalauswertung in der adaptiven Schwellwerteinheit 11 ist aus dem in Figur 5 dargestellten Flussdiagramm ersichtlich.

Das Flussdiagramm zeigt die Auswertung für eine Empfangssignalkurve der Empfangssignale an den Ausgängen der Empfangselemente einer Zeile des Empfängers 6.

Die in Figur 5 dargestellte Signalauswertung dient insbesondere auch zur Eliminierung von Störsignalen, die beispielsweise durch Rauschen oder fehlerhafte Kontrastmuster des Barcodes 2 hervorgerufen werden.

Mit Start ist in Figur 5 der Beginn der Auswertung gekennzeichnet, zu dem die Spitzenwerte der differenzierten Empfangssignalkurve seriell in die Bewertungseinheit eingelesen werden.

Zuerst wird im Spitzenwertfinder 17 ein erster Spitzenwert gesucht. Dieser Spitzenwert ist im Flußdiagramm mit SET gekennzeichnet. Der Spitzenwert SET wird in dem Spitzenwertselektierer 18 mit einem fest vorgegebenen, den Anfangswert bildenden Schwellwert MIN verglichen. Ist der Betrag des Spitzenwertes kleiner als der Schwellwert MIN, so wird er in der Bewertungseinheit verworfen, d.h. er wird zur Auswertung nicht herangezogen und es wird der nächste Spitzenwert gesucht. Dies wird solange wiederholt, bis der erste Spitzenwert gefunden ist, der den Schwellwert übersteigt. Dieser Spitzenwert wird abgespeichert (Speichere SET). Aus diesem Schwellwert wird für den nachfolgenden Spitzenwert ein neuer Schwellwert berechnet. Danach wird der nächste Spitzenwert gesucht.

Dieser Spitzenwert SET wird zunächst auf sein Vorzeichen untersucht. Hat dieser Spitzenwert dasselbe Vorzeichen wie der erste Spitzenwert SET und überschreitet er den in der Schwellwerteinheit 21 gespeicherten Anfangs-Schwellwert MIN, so wird dieser Spitzenwert (SET) mit dem abgespeicherten Spitzenwert (SET) verglichen, wobei der betragsmäßig größere Spitzenwert (SET) auf diese Speicherstelle übernommen wird.

Tritt zwischen den beiden Spitzenwerten SET kein Vorzeichenwechsel bei dem differenzierten Empfangssignal auf, so wird der betragsmäßig kleinere Spitzenwert SET verworfen.

Tritt zwischen den beiden Spitzenwerten SET ein Vorzeichenwechsel auf, so hängt es vom Betrag des Vorzeichens ab, welcher der Spitzenwerte verworfen wird. Weisen die Spitzenwerte negatives Vorzeichen auf, so wird der erste Spitzenwert verworfen, bei positivem Vorzeichen wird der letzte Spitzenwert verworfen.

Mit dieser Auswertung werden auftretende Folgen von Spitzenwerten mit gleichem Vorzeichen vollständig unterdrückt, wodurch Fehldekodierungen von Barcodes 2 effizient verhindert werden können.

Eine fehlerfreie Dekodierung von Barcodes 2 liefert in jedem Fall eine alternierende Folge von positiven und negativen Spitzenwerten. Treten hintereinander zwei Spitzenwerte gleichen Vorzeichens auf, so ist der dazwischen liegende negative Spitzenwert durch eine Fehldetektion verloren gegangen. Bei Löschen des ersten positiven Spitzenwertes geht zwar lokal Information verloren, jedoch wird die dem Barcode-Muster entsprechende Alternierungsfolge der Spitzenwerte wieder erhalten.

Hat der zweite Spitzenwert RESET ein zum ersten Spitzenwert SET unterschiedliches Vorzeichen, so wird der Spitzenwert RESET mit dem aus dem vorigen Spitzenwert SET berechneten Schwellwert verglichen. Da dieser Schwellwert aus dem Spitzenwert SET durch Multiplikation mit dem negativen Faktor a berechnet worden ist, hat der Schwellwert dasselbe Vorzeichen wie der Spitzenwert RESET und kann zu dessen Bewertung herangezogen werden.

Liegt der Spitzenwert RESET unterhalb des Schwellwertes, so wird er verworfen. Im anderen Fall wird er im Speicherelement 20 abgespeichert und daraus der nächste Schwellwert berechnet.

Danach wird der nächste Spitzenwert SET mit dem Vorzeichen des ersten Spitzenwertes gesucht und abgespeichert, falls er den neu berechneten Schwellwert übersteigt. Hat der Spitzenwert das falsche Vorzeichen (RESET), so wird er verworfen.

Übersteigt der Spitzenwert SET den Schwellwert nicht, so wird eine zusätzliche Abfrage durchgeführt, ob er den Anfangs-Schwellwert MIN übersteigt. Falls dieses nicht der Fall ist, wird der Spitzenwert verworfen. Falls der Spitzenwert den Anfangs-Schwellwert MIN übersteigt, so wird er abgespeichert.

Diese zusätzliche Abfrage auf den Anfangs-Schwellwert dient dazu, dass plötzlich auftretende Kontrastschwankungen der Barcodes 2 nicht zu Fehldekodierungen führen. In diesem Fall wird der entsprechende Spitzenwert noch mit dem Anfangs-Schwellwert MIN erfasst.

Aus dem neuen Spitzenwert wird wiederum der aktuelle Schwellwert berechnet.

Danach liegt in dem Speicherelement 20 der Bewertungseinheit ein Paar von aufeinanderfolgenden Spitzenwerten SET / RESET mit unterschiedlichen Vorzeichen vor. Dieses Paar wird über die Steuereinheit 19 in das zweite Speicherelement 23 eingelesen. Danach sind im Speicherelement 20 zwei Speicherstellen frei für eine erneute Aufnahme von zwei Spitzenwerten.

Dieser Vorgang wird wiederholt, bis sämtliche Signalwerte der Empfangssignalkurve abgearbeitet sind (Zeilenende). Die dabei erhaltene binäre Teilsignalfolge wird zur Dekodierung in die Auswerteeinheit 13 eingelesen. Danach wird dieselbe Auswertung für die Empfangssignalkurve der nächsten Zeile des Empfängers 6 durchgeführt, bis die Empfangssignale sämtlicher Empfangselemente abgearbeitet sind.

### Bezugszeichenliste

- (1): Optoelektronische Vorrichtung
- (2): Barcode
- (3): Sendelichtstrahlen
- (4): Sender
- (5): Empfangslichtstrahlen
- (6): Empfänger
- (7): Sendeoptik
- (8): Empfangsoptik
- (9): Chip
- (10): Analog-Digitalwandler
- (11): adaptive Schwellwerteinheit
- (12): erste Zuleitung
- (13): Auswerteeinheit
- (14): weitere Zuleitung
- (15): Filter
- (16): Differenzierer
- (17): Spitzenwertfinder
- (18): Spitzenwertselektierer
- (19): Steuereinheit
- (20): Speicherelement
- (21): Schwellwerteinheit
- (22): Zeitgeber
- (23): zweites Speicherelement
- (B): Beleuchtungsebene

## Patentansprüche

1. Optoelektronische Vorrichtung zum Erkennen von jeweils einer Anordnung von hellen und dunklen Flächenelementen aufweisenden Barcodes mit wenigstens einem Sendelichtstrahlen emittierenden Sender und einem Empfangslichtstrahlen empfangenden Empfänger mit einer matrixförmigen Anordnung von Empfangselementen, wobei wenigstens ein Barcode zumindest teilweise auf dem Empfänger abgebildet ist und an den Ausgängen der Empfangselemente Empfangssignale in Form von der Struktur der Flächenelemente des Barcodes entsprechenden Grauwerten anstehen, dadurch gekennzeichnet, dass dem Empfänger (6) eine adaptive Schwellwerteinheit (11) nachgeordnet ist, in welcher die Empfangssignale in binäre Signale gewandelt werden, und dass in einer der adaptiven Schwellwerteinheit (11) nachgeordneten Auswerteeinheit (12) anhand der Folge der binären Signale die Dekodierung des Barcodes (2) erfolgt.

2. Optoelektronische Vorrichtung nach Anspruch 1, dadurch gekennzeichnet, dass die adaptive Schwellwerteinheit (11) von einer Hardware-Schaltungsanordnung gebildet ist.

3. Optoelektronische Vorrichtung nach einem der Ansprüche 1 oder 2, dadurch gekennzeichnet, dass der Empfänger (6) von einem matrixförmigen CMOS Bildsensor gebildet ist.

4. Optoelektronische Vorrichtung nach Anspruch 3, dadurch gekennzeichnet, dass dem CMOS Bildsensor ein Analog-Digitalwandler (10) nachgeordnet ist, in welchem ein analoges Empfangssignal digitalisiert wird, und dass das digitalisierte Empfangssignal in die adaptive Schwellwerteinheit (11) eingelesen wird.

5. Optoelektronische Vorrichtung nach Anspruch 4, dadurch gekennzeichnet, dass der Analog-Digitalwandler (10) eine Wortbreite von 8 bit aufweist.

6. Optoelektronische Vorrichtung nach einem der Ansprüche 4 oder 5, dadurch gekennzeichnet, dass die Ausgangssignale am Analog-Digitalwandler (10) parallel in die adaptive Schnittstelleneinheit eingelesen werden.

7. Optoelektronische Vorrichtung nach einem der Ansprüche 4-6, dadurch gekennzeichnet, dass der Analog-Digitalwandler (10) im CMOS-Bildsensor integriert ist.

8. Optoelektronische Vorrichtung nach einem der Ansprüche 4-7, dadurch gekennzeichnet, dass der CMOS-Bildsensor, der Analog-Digitalwandler (10) und die adaptive Schwellwerteinheit (11) von einer Hardware-Schaltungsanordnung gebildet sind.

9. Optoelektronische Vorrichtung nach einem der Ansprüche 1 oder 2, dadurch gekennzeichnet, dass der Empfänger (6) von einem matrixförmigen CCD-Element gebildet ist.

10. Optoelektronische Vorrichtung nach Anspruch 9, dadurch gekennzeichnet, dass die analogen Empfangssignale an den Ausgängen der Empfangselemente unmittelbar oder über einen Analog-Digitalwandler (10) in die adaptive Schwellwerteinheit (11) eingelesen werden.

11. Optoelektronische Vorrichtung nach einem der Ansprüche 1 - 10, dadurch gekennzeichnet, dass die Empfangssignale an den Ausgängen der matrixförmig angeordneten Empfangselemente zeilenweise in die adaptive Schwellwerteinheit (11) eingelesen werden.

12. Optoelektronische Vorrichtung nach einem der Ansprüche 1 - 11, dadurch gekennzeichnet, dass in der adaptiven Schwellwerteinheit (11) das eingelesene Empfangssignal in einem Differenzierer (16) differenziert wird, und dass das differenzierte Empfangssignal mit von dessen Amplituden abhängigen Schwellwerten bewertet wird.
